# EUROPÄISCHE PATENTSCHRIFT

(11) **EP 0 617 205 B1**
(45) Veröffentlichungstag und Bekanntmachung des Hinweises auf die Patenterteilung: **04.11.1998**
(21) Anmeldenummer: 94103505.7
(22) Anmeldetag: 08.03.1994
(51) Int. Cl.: F16B 15/00, F16B 19/00

(54) **Nagel mit einem Spreizbereich**
Nail with enlarged section
Clou avec région élargie

(30) Priorität: 20.03.1993 DE 4309047
(43) Veröffentlichungstag der Anmeldung: 28.09.1994
(73) Patentinhaber: fischerwerke Artur Fischer GmbH & Co. KG, D-72178 Waldachtal (DE)
(72) Erfinder: Fischer, Artur, Prof. Dr. h. c., D-72178 Waldachtal (DE)

(56) Entgegenhaltungen:
- EP-A- 0 145 886
- EP-A- 0 149 052
- WO-A-93/23677
- DE-C- 520 368
- DE-U- 8 233 844
- DE-U- 8 536 615
- DE-U- 8 628 212
- FR-A- 1 195 076
- GB-A- 580 272

## Beschreibung

Die Erfindung betrifft einen Nagel mit einem Spreizbereich gemäß Oberbegriff des Anspruchs 1.

Aus der DE 33 45 331 A1 ist ein als Nagel ausgebildetes Befestigungselement bekannt, das im Bereich der Nagelspitze einen Spreizbereich hat, der von zwei im Abstand verlaufenden, nach außen gewölbten Schenkeln gebildet wird. Die Verankerung eines solchen Befestigungselements erfolgt in der Weise, daß dessen Schaft in ein vorgebohrtes Bohrloch eines Mauerwerks oder dergleichen eingeschlagen wird. Beim Eintreiben des Schafts in das Bohrloch werden die Spreizschenkel von der Bohrlochwandung nach innen zusammengepreßt, wobei durch eine zwischen den Spreizschenkeln befindliche Einlage ein erhöhter Druck von den Spreizschenkeln gegen die Bohrlochwandung erzeugt werden kann. Nach dem Eintreiben werden die Spreizschenkel des Befestigungselements durch die plastische und/oder elastische Rückstellkraft der Einlage gegen die Bohrlochwandung gepreßt und damit eine entsprechend hohe Haltekraft erreicht.

Ausgehend von einem derartigen Nagel liegt der Erfindung die Aufgabe zugrunde, einen Nagel mit einem die Haltekraft erhöhenden Spreizbereich zu schaffen, der einfach herstellbar ist und gute Haltewerte besitzt.

Die Lösung dieser Aufgabe erhält man durch die im Anspruch 1 angegebenen Merkmale. Im Spreizbereich besitzt der Nagel eine Nut, die sich zur Nagelspitze hin verjüngt und deren Nutengrund in Richtung Nagelspitze zur Mantelfläche des Schaftes ansteigt. Da die Nut vorzugsweise durch ein Kerbwerkzeug beziehungsweise einen entsprechend geformten Stempel am Schaft eingeprägt wird, ergibt sich durch die Verjüngung der Nut ein sich entsprechend zur Spitze hin verjüngender Spreizbereich. Dies erleichtert das Eintreiben des Nagels in ein Bohrloch eines Mauerwerks, wobei andererseits die Formgebung des Spreizbereichs hohe Haltewerte ergibt.

Die Nut kann mit Kunststoff ausgefüllt werden, wobei das Kunststoffmaterial am Schaft übersteht. Ein derartig ausgebildeter Nagel hat den weiteren Vorteil, daß der Kunststoff beim Eintreiben des Nagels in ein Bohrloch durch die Bohrlochwandung elastisch verdichtet wird, wodurch der Spreizbereich eine erhöhte Nachspreizwirkung erhält. Dies bedeuted, daß beispielsweise bei einer Rißbildung im Bereich des Bohrlochs, in welchem der Nagel eingesetzt ist, das Kunststoffmaterial und auch die Wandungen im Spreizbereich nachspreizen. Am Nagel auftretende Zugkräfte können möglicherweise eine geringfügige Längsbewegung des Nagels bewirken, wobei dann der im Bohrloch verspannte Kunststoff durch den ansteigenden Nutengrund verstärkt gegen die Bohrlochwandung gepreßt wird, so daß sich die Haltekraft dadurch erhöht.

Als Korrosionsschutz kann der gesamte Nagel mit Kunststoff überzogen sein, wobei es sehr vorteilhaft ist, eine Ringnut oder eine Ringkerbe vorzusehen, die eine Relativbewegung zwischen Kunststoffmaterial und Nagel im Spreizbereich zuläßt. Dadurch wird das Nachspreizverhalten positiv beeinflußt.

Da der erfindungsgemäße Nagel sehr hohe Haltewerte hat und demzufolge nur sehr schwer demontierbar ist, sieht eine Weiterbildung der Erfindung vor, daß zentrisch zur Mittelachse des Schaftes am Nagelkopf eine Zentrierkerbe ausgebildet ist. An dieser Zentrierkerbe kann ein Bohrer mit dem Durchmesser des Nagelschafts angesetzt werden, um den Nagelkopf exakt abbohren zu können. Ein mittels des Nagels befestigter Gegenstand kann dann vom Nagelschaft problemlos abgezogen werden, wobei der Nagelschaft dann gegebenenfalls abgezwickt oder mit einem entsprechenden Werkzeug gefaßt und aus dem Bohrloch herausgezogen werden kann.

Die Erfindung wird anhand von in der Zeichnung dargestellten Ausführungsbeispielen näher erläutert.

Es zeigen:
Figur 1 einen Nagel mit zu seiner Spitze hin sich verjüngenden Nut im Spreizbereich,
Figur 2 den Nagel von Figur 1 teilweise im Längsschnitt,
Figur 3 den Nagel von Figur 1, dessen Nut jedoch mit Kunststoff ausgefüllt ist,
Figur 4 den Nagel von Figur 3 teilweise im Längsschnitt,
Figur 5 einen nahezu vollständig mit Kunststoff überzogenen Nagel teilweise im Längsschnitt mit einer Ringkerbe im Kunststoffmantel,
Figur 6 einen nahezu vollständig mit Kunststoff ummantelten Nagel teilweise im Längsschnitt mit einer Ringnut im Kunstoffmantel und
Figur 7 das vergrößerte Teil A gemäß Figur 6 im Längsschnitt.

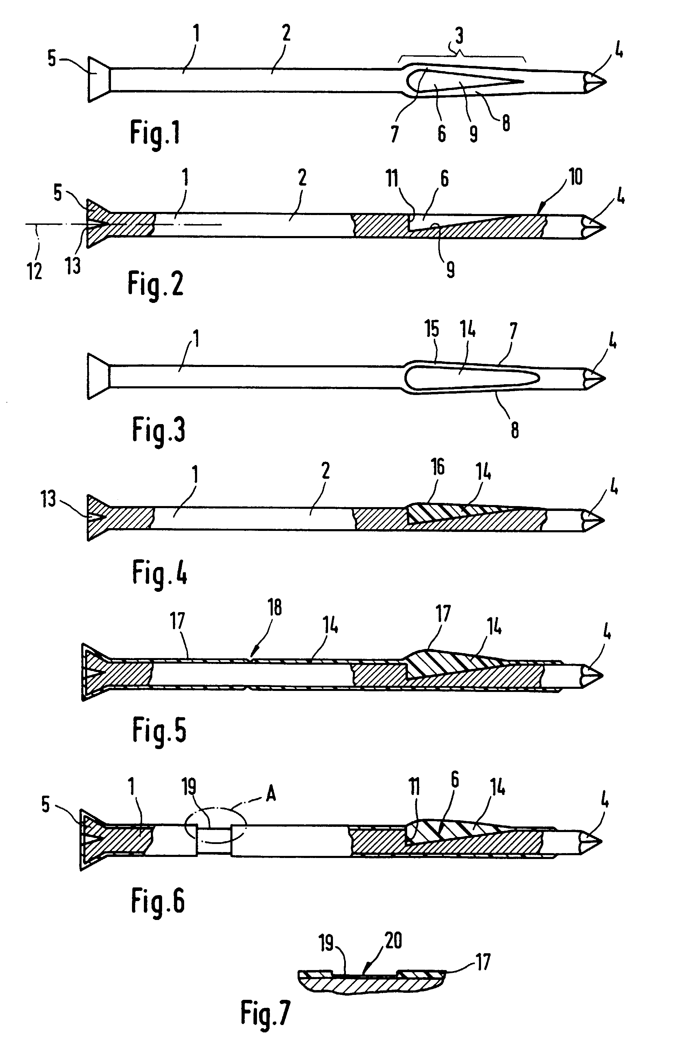

Der in Figur 1 dargestellte Nagel 1 hat an seinem Schaft 2 einen im Querschnitt erweiterten Spreizbereich 3, der sich zur Nagelspitze 4 verjüngt. Der Nagelkopf 5 ist als Senkkopf ausgebildet, wobei jedoch andere Kopfformen gleichermaßen möglich sind.

Der Spreizbereich 3 beinhaltet eine Nut 6, die von seitlichen Wandabschnitten 7, 8 begrenzt wird.

In Figur 2 ist ersichtlich, daß der Nutengrund 9 der Nut 6 in Richtung Nagelspitze 4 zur Mantelfläche 10 des Schaftes 2 ansteigt. An der der Nagelspitze 4 abgewandten Seite der Nut 6 wird diese von einer senkrechten Wand 11 begrenzt.

In Figur 2 ist auch ersichtlich, daß am Nagelkopf 5 zentrisch zur Mittelachse 12 eine Zentrierkerbe 13 eingeprägt ist.

Bei dem Nagel 1 von Figur 3 ist die Nut 6 mit Kunststoff 14 ausgefüllt, wobei der Rand 15 des Kunststoffs 14 den Nutenrand geringfügig überdeckt, so daß die Nut 6 in dieser Darstellung nicht sichtbar ist.

In Figur 4 ist insbesondere erkennbar, daß der Kunststoff 14 eine gewölbte Erhöhung 16 bildet und somit am Schaft 2 übersteht. Die Erhöhung 16 fällt zur Nagelspitze 4 ab.

Der in Figur 5 dargestellte Nagel 1 ist bis auf einen kleinen Bereich an der Nagelspitze 4 vollständig mit Kunststoff 14 überzogen. Zwischen Nagelkopf 5 und Spreizbereich 3 ist in der Kunststoffummantelung 17 eine Ringkerbe 18 ausgebildet.

Bei dem Ausführungsbeispiel von Figur 6 besitzt die Kunststoffummantelung 17 eine Ringnut 19. Die vergrößerte Darstellung von Figur 7 zeigt einen Längsschnitt im Bereich der Ringnut 19. Hier ist erkennbar, daß der Nutengrund 20 der Ringnut 19 eine wesentlich dünnere Wandstärke besitzt als die sonstige Kunststoffummantelung 17. Dadurch wird eine Längendehnbarkeit im Bereich der Nut 19 erreicht, so daß bei einem Nachspreizvorgang und einer damit verbundenen Längsverschiebung des Kunststoffmaterials die Kunststoffummantelung 17 auch im Bereich der Ringnut 19 nicht aufreißen muß. Der Korrosionsschutz kann damit auch nach einem solchen Nachspreizvorgang weiterbestehen.

Es wird noch darauf hingewiesen, daß beim Eintreiben des Nagels 1 in ein Bohrloch eines Mauerwerks sich der Kunststoff 14 im Bereich der Nut 6 an deren rückwärtiger Wand 11 abstützt, damit der Kunststoff 14 sich nicht in Richtung Nagelkopf 5 verschiebt. Die Wandungen 7, 8 verlaufen in spitzem Winkel in Richtung Nagelspitze 4, wodurch das Einschlagen des Nagels 1 in ein Bohrloch eines Mauerwerks erleichtert wird.

## Patentansprüche

1. Nagel mit einem die Haltekraft erhöhenden Spreizbereich, an dessen Schaft zur Bildung des Spreizbereichs Wandungsabschnitte seitlich überstehen, zwischen denen sich ein nach außen offener Freiraum befindet, **dadurch gekennzeichnet**, daß der Freiraum als eine sich zur Nagelspitze (4) hin verjüngende Nut (6) ausgebildet ist, die seitlich von den Wandungsabschnitten (7, 8) begrenzt ist und deren Nutengrund (9) in Richtung Nagelspitze (4) zur Mantelfläche (10) des Schaftes (2) ansteigt.

2. Nagel nach Anspruch 1**, dadurch gekennzeichnet**, daß die Wandungsabschnitte (7, 8) ausgehend von einer der Nagelspitze (4) abgewandten Schaftverbreiterung in spitzem Winkel in Richtung Nagelspitze (4) verlaufen.

3. Nagel nach einem der Ansprüche 1 oder 2, **dadurch gekennzeichnet**, daß die Nut (6) mit Kunststoff (14) ausgefüllt ist, der an der offenen Seite der Nut (6) über den Schaft (2) des Nagels (1) in Form einer zur Nagelspitze (4) hin abfallenden Erhöhung (16) hinausragt.

4. Nagel nach einem der vorhergehenden Ansprüche, **dadurch gekennzeichnet**, daß der Schaft (2) einschließlich Spreizbereich (3) mit Kunststoff (14) überzogen ist, daß die dadurch gebildete Kunststoffummantelung (17) zwischen Nagelkopf (5) und Spreizbereich (3) eine Ringkerbe (18) oder eine breite Ringnut (19) aufweist, und daß die zwischen Ringkerbe (18) oder Ringnut (19) und Nagelspitze (4) befindliche Kunststoffummantelung (17) zumindest geringfügig in Richtung Nagelspitze (4) verschiebbar ist.

5. Nagel nach einem der vorhergehenden Ansprüche, **dadurch gekennzeichnet**, daß die Nut (6) an dem dem Nagelkopf (5) zugewandten Ende des Spreizbereichs (3) von einer bezüglich der Mantelfläche (10) des Schaftes (2) im wesentlichen senkrechten Wand (11) begrenzt ist.

6. Nagel nach einem der vorhergehenden Ansprüche, **dadurch gekennzeichnet**, daß zentrisch zur Mittelachse (12) des Schaftes (2) im Nagelkopf (5) eine Zentrierkerbe (13) eingeprägt ist.

## Claims

1. Nail having an expansion region which increases the holding force, the expansion region being formed by side portions which project laterally from the nail shank, between which side portions there is a cavity open to the outside, characterized in that the cavity is in the form of a groove (6), which becomes narrower towards the nail tip (4) and which is bounded laterally by the side portions (7, 8) and the base (9) of which rises towards the nail tip (4) to the outer surface (10) of the shank (2).

2. Nail according to claim 1, characterized in that, starting from a widening of the shank remote from the nail tip (4), the side portions (7, 8) extend towards the nail tip (4) at an acute angle.

3. Nail according to one of claims 1 and 2, characterized in that the groove (6) is filled with plastics material (14), which on the open side of the groove (6) projects above the shank (2) of the nail (1) in the form of a protuberance (16), which tapers off towards the nail tip (4).

4. Nail according to one of the preceding claims, characterized in that the shank (2), including the expansion region (3), is coated with plastics material (14), and the plastics sheathing (17) thereby formed has an annular notch (18) or a wide annular groove (19) between the nail head (5) and the expansion region (3), and the plastics sheathing (17) located between the annular notch (18) or annular groove (19) and the nail tip (4) is at least slightly displaceable towards the nail tip (4).

5. Nail according to one of the preceding claims, characterized in that, at the end of the expansion region (3) nearest the nail head (5), the groove (6) is bounded by a wall (11), which is essentially perpendicular to the outer surface (10) of the shank (2).

6. Nail according to one of the preceding claims, characterized in that a centring notch (13) is impressed in the nail head (5) concentrically with the central axis (12) of the shank (2).

## Revendications

1. Clou muni d'une région élargie augmentant la force de retenue et sur la tige duquel, en vue de former la région élargie, des zones de paroi font saillie latéralement et réservent, entre elles, un espace libre ouvert vers l'extérieur, caractérisé par le fait que l'espace libre est réalisé sous la forme d'une saignée (6) qui se rétrécit vers la pointe (4) du clou, est délimitée latéralement par les zones de paroi (7, 8), et dont le fond (9) monte en direction de la pointe (4) du clou par rapport à la surface périphérique (10) de la tige (2).

2. Clou selon la revendication 1, caractérisé par le fait que les zones de paroi (7, 8) s'étendent selon un angle aigu, en direction de la pointe (4) du clou, à partir d'un élargissement de la tige qui est tourné à l'opposé de ladite pointe (4) du clou.

3. Clou selon l'une des revendications 1 ou 2, caractérisé par le fait que la saignée (6) est comblée d'une matière plastique (14) qui dépasse au-delà de la tige (2) du clou (1), sur le côté ouvert de ladite saignée (6), sous la forme d'une protubérance (16) déclinant vers la pointe (4) dudit clou.

4. Clou selon l'une des revendications précédentes, caractérisé par le fait que la tige (2) est revêtue de matière plastique (14), y compris la région élargie (3) ; par le fait que l'enrobage (17) en matière plastique, ainsi formé, présente une encoche annulaire (18) ou une large dépouille annulaire (19) entre la tête (5) du clou et la région élargie (3) ; et par le fait que l'enrobage (17) en matière plastique, situé entre la pointe (4) du clou et l'encoche annulaire (18) ou la dépouille annulaire (19), peut coulisser au moins légèrement en direction de ladite pointe (4) du clou.

5. Clou selon l'une des revendications précédentes, caractérisé par le fait que la saignée (6) est délimitée, à l'extrémité de la région élargie (3) qui est tournée vers la tête (5) du clou, par une paroi (11) pour l'essentiel verticale vis-à-vis de la surface périphérique (10) de la tige (2).

6. Clou selon l'une des revendications précédentes, caractérisé par le fait qu'une entaille de centrage (13) est empreinte dans la tête (5) du clou, centralement vis-à-vis de l'axe médian (12) de la tige (2).
